# EUROPEAN PATENT APPLICATION

(11) **EP 2 073 500 A1**
(43) Date of publication of application: **24.06.2009**
(21) Application number: 07024996.6
(22) Date of filing: 21.12.2007
(51) Int. Cl.: H04L 29/08

(54) **Method for controlling the transfer of data entities from a server unit on a communication channel**

(71) Applicant: SES Astra S.A., 6815 Château de Betzdorf (LU)
(72) Inventor: Dulaunoy, Alexandre J. D., 6811 Les Bulles-Chiny (BE); Noll, Michael G., 54457 Wincheringen (DE)
(74) Representative: HOFFMANN EITLE

(57) **Abstract**

A method for controlling the transfer of a data entity (24) from a server unit (2) on a communication channel (6) and reducing bandwidth usage on the communication channel (6) is provided. It includes a voting procedure (S32) for transferring, to the server unit (2), a vote on classification metadata of the data entity (24); and a generating procedure (S34) for generating, by the server unit (2), a community vote on the data entity (24) from transferred votes on classification metadata of the data entity (24). The transfer of the data entity (24) is controlled based on the community vote.

## Description

### [Field of technology]

The present invention relates to a method for controlling the transfer of a data entity from a server unit on a communication channel. It also relates to a system for controlling the transfer of a data entity from a server unit on a communication channel, and to a server unit, a client unit and a signal for use in such a system. In addition, the invention also relates to a computer program configured, when executed on a computer, to carry out the above-mentioned method.

### [Background]

In computer network technology, data entities, such as video files, audio files, executable game files, or the like, are often required to be transmitted from one or more servers, also called server units or server computers, on which the data entities are stored, to one or more clients, also called client units or client computers, which are each typically end users computers. For instance, a client obtains, or downloads, a list of references to a series of data entities, such as a list in the form of an HTML (Hypertext Markup Language) page. From the list of references to data entities, the end user interacting with the client computer selects a particular reference to a data entity to request its transmission, or in other words its download.

Once a reference to the data entity is selected by the end user interacting with the client, a request is transferred to the server, which provides back the data entity to the client. The bytes making up the data entity are transferred from the server to the client on a communication channel.

The communication channel may comprise a plurality of segments such as a wireless communication channel from a wireless device, e.g. a laptop, to a wireless access point, such as a wired communication link from a modem integrated into the wireless access point to the facilities of an internet service provider (ISP) (the so-called last mile), and a series of other physical segments. Some of the communication segments may typically be shared between a plurality of clients. Each communication segment typically has a limited capacity in terms of number of bytes that can be transmitted over the channel per unit of time. In other words, the available bandwidth associated with the communication channel is limited.

Increasing the bandwidth resource on a communication channel is generally accompanied by an increase in the infrastructure cost, such as those caused by the addition of repeaters on the communication channel or the use of more elaborated modulation schemes. There is therefore a need for methods for efficiently using a given bandwidth resource in data communications.

In the above-mentioned list of references to data entities provided to a client, in addition to providing a description of each data entity, which may for instance include the title of a video clip offered for download, an indication of the quality of the data entity may be provided. For instance, providing one, two, three, four or five stars next to the title of the video clip provides an indication of its quality. The indication of quality may be obtained by collecting users' opinions on the quality. This may include obtaining the opinion of the users which have previously obtained a data entity and may therefore judge its quality.

There is a need for improving such a user-driven content recommendation system.

### [Summary]

It has been recognized that the use of such user-driven content recommendation systems can lead to a reduction of bandwidth usage or an efficient use of the available bandwidth resources. This is obtained by providing information to clients so that the end users interacting with the clients do not request the transfer of data entities with which they are likely to be unsatisfied, and which they are likely to discard before viewing them completely. In average, fewer data entities per user and per unit of time are therefore requested.

A need has been recognized for improving such user-driven content recommendation systems as means of efficiently using the available bandwidth resources. The need for using these resources in an efficient manner is acute when the communication channel is not easily scalable, such as in the context of direct satellite-to-home internet connectivity.

The present invention aims at meeting or at least partially meeting the above-mentioned needs.

According to the invention, a method for controlling the transfer of a data entity from a server unit on a communication channel is provided. The method includes a voting procedure for transferring, to the server unit, a vote on classification metadata of the data entity. The method also includes a generating procedure for generating, by the server unit, a community vote on the data entity from transferred votes on classification metadata of the data entity. The transfer of the data entity is eventually controlled based on the community vote.

The method of the invention is suitable for controlling the transfer of a data entity which is stored on a server unit. A data entity is a set of bytes forming a semantic unity and is for instance a video file, an audio file, an executable game file, an image, an electronic book (e-book), a reference to another data entity (in a recursive embodiment), or the like.

The server unit may for instance be a web server or a hub station having integrated storage capabilities or having access to a storage unit, such as a database, wherein data entities are stored.

The server unit is configured for receiving votes on classification metadata of a data entity. A vote on a target is an expression of the perceived value or relevance of the target. The classification metadata of a data entity is an attribute associated with the data entity which represents the class or category to which the data entity belongs, or may belong to a certain extent. A classification metadata of a data entity may for instance represent a type of content such as "art", *"nudity*", "*black and white*"*,* "*pornography*", "*western*", "*romance*", "*documentary*", "*drama*", "*horror*", or the like.

A vote on classification metadata of a data entity, or on a piece of classification metadata of a data entity, is the expression of a perceived value or relevance of the association of the piece of classification metadata and the data entity. In other words, such a vote is a multidimensional data structure representing an opinion which is not directly linked to a data entity, but indirectly linked to the data entity. In that sense, such a vote is not targeted on a data entity or on its quality but on the association of a piece of classification metadata, such as a semantic class or category, and a data entity.

A vote on a piece of classification metadata is not an opinion on whether a data entity is *"very good", "good", "so so", "bad",* or *"very* bad". Instead, such a vote is an expression of whether the association between one category, for instance *"pornography",* and a data entity, for instance a movie, is appropriate.

The server unit receives such votes which are transferred for instance from client units. The client units may be processing units which are capable of producing votes without human intervention or user interfaces configured for receiving votes from human users. The server unit generates from the transferred vote on classification metadata of a data entity a community vote on the data entity.

In one embodiment of the generating procedure, the transferred votes are aggregated and the community vote is a percentage of the total number of individual transferred votes, namely the percentage indicating that the association of a piece of classification metadata and a data entity is appropriate.

For instance, if a total number of 131 votes on the association between a given movie and the category "romantic comedy" are transferred to the server unit, if, amongst these 131 votes, 95 votes are transferred indicating that the association between the given movie and the category *"romantic comedy"* is appropriate, while 36 votes are transferred indicating that the association between the given movie and the category *"romantic comedy"* is not appropriate, the community vote on the data entity may include an indication that the association between the given movie and the category *"romantic comedy"* is appropriate to a degree of 73 percent. Additionally, the community vote may include an indication that the association between the movie and the category *"romantic drama"* is appropriate to a degree of 15 percent and an indication that the association between the movie and the category *"pornography"* is appropriate to a degree of 2 percent. That is, the community vote on a data entity may be a list of a plurality of aggregations of votes on classification metadata of the data entity.

Based on the community vote, a determination, decision or control as to whether or not the transfer of the data entity is requested is made. The community vote on a data entity constitutes fine-grained user-driven recommendation data which, when provided to the unit or units controlling the transfer of the data entity from the server unit on a communication channel, enables to receive fewer requests for transferring data entities, thus reducing the bandwidth usage on the communication channel. This is because the units, for instance client units, in charge of the determination or decision to request the transfer of the data entity request fewer data entities before being satisfied with a received data entity. Instead of downloading fifteen video clips before watching entirely one video clip (for instance because the end user interacting with the client unit is not satisfied with the content, or was not expecting the content, of the fourteen first downloaded video clips), only a couple of video clips, for instance one, two or three, are downloaded before one is watched entirely. This therefore reduces in average the amount of data transferred on the communication channel per user and per unit of time, i.e. the bandwidth usage.

The communication channel may be a direct satellite-to-home channel or any other type of channel, such as an earth-to-earth channel, a fibre optic channel, a coaxial cable channel, or the like.

Besides reducing bandwidth usage as a technical effect, the method provides means suitable for improving the satisfaction of users. The users may more rapidly obtain data entities meeting their expectations.

According to one embodiment, the method further includes a supplying procedure for supplying, to a client unit, the community vote. In this embodiment, the method also includes a determining and requesting procedure for determining, by the client unit, whether to request transfer of the data entity depending on the community vote and, if so, requesting transfer.

This embodiment enables a client unit to be provided with the community vote so that, based thereon, a controlling process may be carried out to determine whether requesting the transfer of the data entity. If the result of the determination is positive, the transfer of the data entity may be requested by sending from the client unit to the server unit a request for transferring the data entity. Since the client unit controls the transfer of the data entity based on the community vote, which constitutes fine-grained data pertaining to the perceived value of the association between classification metadata and the data entity, fewer requests for transfer of data entities are in average sent by each client unit. Thus, the load on the communication channel per user and per unit of time is reduced.

Controlling the transfer of the data entity based on the community vote may be performed automatically, e.g. based on preset parameters and procedures stored in or accessible by the client unit. The control may alternatively be performed with the intervention of a human, for instance an end user. In the later case, a user interface may be provided on the client unit for enabling an end user to obtain the community vote and for enabling the end user to introduce instructions on whether the data entity is to be requested by the client unit. In both cases, the transfer of the data entity is controlled based on the community vote, or controllable based on the community vote.

The transfer of the data entity may additionally be controllable and controlled, automatically or through the intervention of a user, based on a user vote, obtained from the user. In other words, the user vote may override the community vote.

In one embodiment, the method further includes a supplying procedure for supplying, to a client unit, the community vote, a presenting procedure for presenting the community vote on a user interface and a requesting procedure for receiving, by the client unit, an instruction to request the data entity. This embodiment enables obtaining, from an end user by the client unit and based on the presented community vote, a request for transferring the data entity.

The same user interface on the client unit may also be configured for receiving a vote to be transferred to the server unit to later form the basis of the community vote.

According to one embodiment, the method of the invention includes procedures for controlling the transfer of the data entity based on the community vote which involve both automatic determination on whether requesting the data entity and human intervention.

According to one embodiment, the vote on classification metadata of the data entity is a multidimensional data structure including at least one association of a class or category and a preference weight. The preference weight may be obtained in such a manner that it reflects a perceived value of the association between the class or category and the data entity. The association of a class or category and a preference weight, or the plurality of such associations, provides the basis for generating the fine-grained community vote.

In one embodiment, the preference weight reflects the result of an automatic process performed based on a data entity, its content and at least one class or category for determining the appropriate character or the conforming character of the association between the class or category and the data entity (and its content) in accordance with stored criteria.

In one embodiment, in the generating procedure, generating the community vote includes combining the transferred votes. This constitutes a simple implementation of the generating procedure for taking into account the transferred votes for generating the community vote, which may then be transferred to the client units to enable reduction of bandwidth usage.

The transferred votes may for instance be combined by summing the values associated with them, wherein a positive vote is associated with a value of 1 and a negative vote is associated with a value of 0, and by dividing the sum by the total number of transferred votes. This provides a community vote in the form of a proportion of positive transferred votes.

In one embodiment, the method of the invention further includes a refining procedure for refining, by the server unit, the transferred votes by removing invalid, incorrect and/or fake votes. Then, in the generating procedure, generating the community vote is performed from, i.e. after and based on, the refined transferred votes.

Using a refining procedure has several advantages. First, refining and processing the individual transferred votes before generating the community vote based on said individual transferred votes enables to perform a time scaling of the data representing the transferred votes. An effective time window for client or user input may for example be set to be one month. In this example, the refining procedure discards all client or user input, including the transferred votes, which are older than one month. This means that votes older than one month are not taken into account for generating the community vote. Adjusting this time window parameter enables the community vote to be up-to-date in view of recent trends in user behaviour and perception, recent trends in relation to a particular data entity, and recent trends associated with categories or classes.

For instance, the trend associated with the perception of a particular data entity as belonging to a particular category or class may suddenly change. A data entity may suddenly start to become increasingly classified as being pornographic by a majority of end users whereas it was previously perceived as non-pornographic. The relevance of the association between a classification metadata and a data entity, and its content, may evolve in time in response to current events having cultural and semantic significance, or in response to evolving cultural norms.

Selecting a relatively short time value for the window parameter leads to a short term or, to a certain extent, instantaneous view on the data entities and users or clients.

In contrast, increasing the value of the time window parameter leads to a long term view on the data entities and users or clients, i.e. a view with emphasis on the persistent characters of the perception.

Adjusting the time window parameter used in the refining procedure may be performed for reducing the bandwidth usage. In one embodiment, the time window parameter of the refining procedure is adjusted for minimizing the bandwidth usage. This adjustment may be performed empirically.

Secondly, the refining procedure may be used to remove junk user or client inputs, such as spam votes, from the original, unfiltered set of transferred votes. For instance, the transferred votes originating from clients or users which are or who are determined to be consistently or continuously trying to promote or demote specific associations between classification metadata and data entities may be discarded in the refining procedure. The skilled person will recognize how to identify abusive or manipulative votes or users, or at least some types of abusive or manipulative behaviours.

The refining procedure may also be used to identify unwanted automated users, so-called *"voting (ro)bots",* sending a large quantity of votes in a short period of time, and in particular at a high rate unlikely to originate from a human. The identification of unwanted automated users involves the analysis of the client or user input rates, i.e. the number of votes per unit of time. This analysis may be performed in the refining procedure.

The refining procedure may also be used to group similar users into homogeneous groups, so that non-conformist or malicious users are grouped together. This refining procedure, which may include the removal of abnormal input data, or outliers, improves the quality of the community votes as received by the users, in the sense that the community vote is not affected by the transferred votes of users determined to be disrupting the overall aim of the method, which includes reducing bandwidth usage.

In one embodiment, the output of the refining procedure is not only one community vote, but a plurality of community votes, each generated based on particular refining parameters. One community vote may for instance take into account the input of all users while another one may take into account only the input of the users identified as reliable, e.g. due to their vote history. Yet another community vote may take into account only some categories of users identified by their educational, cultural or religious background, or alternatively may take into account all users except such particular users. This enables to generate community votes which better correspond to the background of the specific users obtaining the community vote and making the decision to request the transfer of the data entity or to disregard it. It follows that the community vote fits in a more appropriate manner with the deciding user, thus increasing the likelihood that the user will be satisfied with the data entity and thus in average reducing the bandwidth usage.

The refining procedure enables to remove or discard parts of the full, original set of transferred votes. The memory consumption and computation time dedicated to the generating procedure is thus reduced. Thus, the refining procedure does not only improve the quality, i.e. the accuracy and correctness, of the community votes, but also improves the technical efficiency of the generating procedure.

The invention also relates to a system for controlling the transfer of a data entity from a server unit on a communication channel. The system includes a server unit and a client unit. The server unit includes a vote receiving unit and a generating unit. The vote receiving unit is configured for receiving a vote on classification metadata of the data entity. The generating unit is configured for generating a community vote on the data entity from received votes on classification metadata of the data entity. In the system, the transfer of the data entity from the server unit to the client unit is controlled based on the community vote, or controllable based on the community vote.

The invention also relates to a server unit for use in a system for controlling the transfer of a data entity from the server unit on a communication channel. The server unit includes a vote receiving unit configured for receiving a vote on classification metadata of the data entity and a generating unit configured for generating a community vote on the data entity from received votes on classification metadata of the data entity.

The invention also relates to a client unit for use in a system for controlling the transfer of a data entity from a server unit on a communication channel. The client unit includes a determining and requesting unit configured for determining whether to request transfer of the data entity depending on the community vote and, if so, requesting transfer.

The invention also relates to a signal sent from the client unit according to the invention to the server unit according to the invention and including a vote on classification metadata of the data entity.

The invention also relates to a computer program configured, when executed on a computer, to carry out a method for controlling the transfer of a data entity from a server unit on a communication channel, wherein the computer is the server unit or the client unit.

### [Brief Description of the Drawings]

Embodiments of the present invention shall now be described, in conjunction with the appended Figures in which:
Fig. 1 shows a schematic configuration of an embodiment of the system according to the invention;
Fig. 2a and 2b show schematic representations of other embodiments of the system according to the invention, wherein the communication channel includes a direct satellite-to-home connection;
Fig. 3 shows a schematic flow chart of an embodiment of the method according to the invention;
Fig. 4 shows a schematic flow chart of another embodiment of the method according to the invention, which should be read in conjunction with Fig. 3;
Fig. 5 shows a schematic flow chart of another embodiment of the method according to the invention, which should also be read in conjunction with Fig. 3;
Fig. 6 shows a schematic flow chart of yet another embodiment of the method according to the invention;
Figs. 7a, 7b and 7c show schematic configurations of embodiments of the server unit according to the invention;
Figs. 8a, 8b represent schematic configuration of embodiments of the client unit according to the invention;
Fig. 9 illustrates a schematic flow chart of the processing performed by a server unit according to one embodiment of the invention;
Fig. 10 illustrates a flow chart of another embodiment of the processing performed in a server unit according to one embodiment of the invention; and
Fig. 11 illustrates a schematic network configuration of a system according to one embodiment of the invention.

### [Detailed Description]

The present invention shall now be described in conjunction with specific embodiments. It may be noted that the specific embodiments serve to provide the skilled person with a better understanding, but are not intended to in any way restrict the scope of the invention, which is defined by appended claims. In particular, the embodiment described independently throughout the description can be combined to form further embodiments to the extent that they are not mutually exclusive.

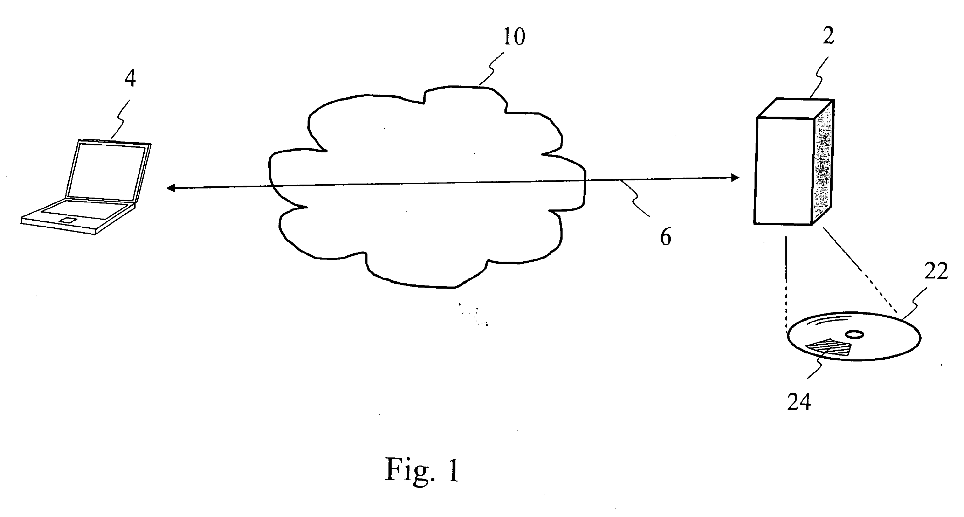

Fig. 1 illustrates a network configuration according to one embodiment of the invention. A server unit 2 is connected to a network 10, such as the internet. The server unit 2 provides access to a data entity 24 stored on a memory storage unit 22, and may be an optical disc, a magnetic disc, or the like. The server unit 2 provides access to the data entity 24 by a client unit 4 through a communication channel 6. While the data entity 24 is illustrated as being stored on a memory storage unit 22 integrated in the server unit 2, the data entity 24 may be stored on any other storage device accessible by the server unit 2.

The client unit 4 may comprise client software for performing the process of controlling the transfer of the data entity 24 based on the community vote, or for performing part of this process. The client software stored on the client unit 4 may also be configured to perform the voting procedure S32, or part of it, for sending, to the server unit 2 through the communication channel 6, a vote on classification metadata of the data entity 24. The client unit 4, and the client software configured to run on said client unit 4, may or may not provide interaction with a human end user. The client unit 4 may be operated by a human, may be automatically operated without the intervention of a human, or may be operated by combining operations performed by a human and operations performed in an automatic manner based on computer-implemented procedures and parameters stored on or provided to the client unit 4.

While the schematic illustration of Fig. 1 only shows one client unit 4, one server unit 2 and one data entity 24, a plurality of client units 4, a plurality of server units 2 and a plurality of data entities 24 may be provided. The data entity 24 or the data entities 24 need not be stored on one memory storage unit 22, but may be stored on a plurality of memory storage units 22, which need not be located at the same location or on the same computer.

The method according to one embodiment of the invention may be described as follows. First, the client unit 4 obtains from the server unit 2 a list of references to available data entities 24. The data entities 24 may be, but are not limited to, video clips, audio files, executable computer files or modules, electronic books (e-books), images, geographical maps, historical records, academic papers, encyclopaedic articles, web sites, dictionary definitions, or the like. The client units 4, or some of them, are configured to be capable of voting on the referred data entities 24. This may for instance occur after a client unit 4 has obtained and downloaded, and viewed, read, or tested it (depending on the nature of the data entity). This preliminary step of obtaining and viewing, reading or testing is however not compulsory. That is, client units 4 may be allowed to vote on a data entity 24 without necessarily obtaining the data entity 24. This for instance makes sense if the data entity 24 is a movie, and if the end user interacting with the client unit 4 has already, previously viewed the movie in a movie theatre.

The client unit 4 sends a vote to the server unit 2. The vote, in one embodiment, is the combination of a value, also called voting value, and a reference to a data entity 24. The reference to the data entity 24, also called object reference, may for instance be a uniform resource locator (URL) for identifying the location of a data entity 24 stored on a web server accessible on the Internet, an international standard book number (ISBN) for identifying a book, a point of interest (POI) for identifying a particular geographical point and optionally information thereon or a stored surrounding map, or the like. A vote is a multidimensional data structure representing a vote on classification metadata of a data entity 24. The vote is not directly associated with the data entity reference. Instead the vote is indirectly linked to the data entity reference in that the vote is a vote on the perceived value of the association between a data entity 24 and a category or class.

Additional client information may be collected when a vote is sent from a client unit 4 to a server unit 2. The additional client information may include the network location of the data entity 24, the type of client software used in the client unit 4, or any other information.

As explained above, a vote is a multidimensional data structure reflecting a vote on a data entity's classification metadata, which is therefore only indirectly made on the data entity itself. This contrasts with existing systems wherein votes are linked in a direct manner to the content.

For instance, US 2007/0118546 relates to a preference prediction system for predicting user's preference with respect to an item. In the discussion of the related art, collaborative preference prediction systems are discussed. In these systems, recommendations are generated by collecting preferences, in the form of a rating selected from a predetermined rating scale, from individual users about individual items. Furthermore, a method is disclosed that includes obtaining a dataset representing a plurality of users, a plurality of items, and a plurality of ratings given to items by users. A rating in this method indicates the strength of a particular user's preference for a particular item, wherein for instance a low value indicates a user's dislike for an item, a high number indicates a user's preference for the item, etc.

WO 02/25469 discloses a method wherein users vote on submitted network links, categories, subcategories or affiliates sites. The links, categories, subcategories or affiliates sites are then ranked based on the votes. In this method, voting is accomplished by selecting an up arrow (*"yes"*) or a down arrow ("no"), wherein the pairs of arrows are shown next to the links. Users vote directly on the user's perceived value of the links.

WO 97/02537 discloses a method for recommending items to users by using ratings given to items by neighbouring users. Item ratings can be of any form that allows users to record subjective impressions of items based on their experience of the item. For example, items may be rated on an alphabetic scale ("*A*" to "*F*") or a numerical scale (1 to 10).

Goldberg D. et al, *Using Collaborative Filtering to Weave an Information Tapestry,* Communications of the ACM, December 1992 discloses a method for collaborative filtering wherein users record their reactions to documents they read. A reaction may be that a document was particularly interesting or particularly uninteresting.

Zuehlke, M., Koenig, H., Voting Based Bandwidth Management in Multiparty Video Conferences, LNCS 2515, Springer, 2002, pp. 202-215, discloses a method for bandwidth management in a video conference system wherein each participant can vote by selecting the participants he/she wants to see.

Existing methods include general votes on the perceived quality of a data entity. While data entities may be classified in categories in existing methods, the submitted votes relate to the general perceived quality of a data entity.

In contrast, a vote in the method of the invention specifically applies to a data entity's classification metadata, i.e. the vote is linked indirectly to a data entity 24. A vote according to the invention is not a general vote of the perceived quality of a data entity 24, but a vote applying specifically to the association between a classification metadata and a data entity 24.

In one embodiment, each vote relates exclusively to the association between a piece of classification metadata and a data entity 24. Several votes may be provided relating to one piece of classification metadata, wherein each of the several votes relate to the association between the piece of classification metadata and one of a plurality of data entities 24. Several votes may also be provided relating to one data entity 24, each of the several votes relating to the association between the data entity 24 and one of a plurality of pieces of classification metadata.

In one embodiment of the invention, the votes of classification metadata of a data entity 24, i.e. the specific vote on the association between classification metadata and a data entity 24, are provided in addition to votes on a data entity 24 itself, i.e. on the quality of a data entity 24, thus directly linked to a data entity 24. There may therefore also be a coexistence of an aggregated rating on the general quality of a data entity 24 and an aggregated rating (community vote) on the association between a piece of classification metadata and the data entity 24.

In an alternative embodiment of the invention, the votes of classification metadata of a data entity 24, i.e. the specific vote on the association between classification metadata and a data entity 24, are provided without providing votes on a data entity 24 itself, i.e. on the quality of the data entity 24. This embodiment prevents the user-driven recommendation system to be affected by a one-dimensional popularity bias.

In one embodiment of the invention, the vote is stored with the metadata information associated to the reference to the data entity 24.

An exemplary vote of a user *U* on an object *O*, the object *O* being a reference to a data entity 24, is represented by a vector v(*U*, *O*) = *v_{c}*. For example:
*v_{c}* = [("art", 1), ("nudity", 1), ("black and white", 1), ("pornography", 0)]^{T}

For the sake of readability, the transposed vector is herewith shown.

In this example, the user U's vote classifies object O by assigning to it the categories "art", "nudity", "black and white" with a positive vote (which represents an IS-association = a "yes" vote) and the category "pornography" with a negative vote (which represents an IS-NOT-association = a "no" vote). The user U provides the information that the data entity 24, among other things, depicts, describes or is about nudity but not about pornography.

In this example, an IS-association (represented by the value "1") is distinguished from an IS-NOT-association (represented by the value "0"). The associations provide information about the data entity's perceived current state. Additional types of associations may be provided such as HAS-BEEN (giving information about the data entity's past state) or WILL-BE (providing information about the data entity's future or expected state), or STRONG-IS or WEAK-IS (providing information about the strength or weight of an association).

In the method of the invention, users vote on classification metadata on the data entities 24. Votes are not dimensionless scores (e.g. values from 1 to 5). In existing systems, a user may give a rating of 1 star (out of a maximum of 5 stars) to a book because he does not like the book. Another user may give a rating of 1 star because the delivery time of the book is perceived as too long. Still another user may give a rating of 1 star because he does not concur with the opinion or conclusions of the author. In the invention, a vote carries more information and enables sharing opinions about a data entity 24 in a more granular manner. In particular, users are provided with information on the nature of a data entity 24, as represented by its association with classification metadata, so that a more educated decision may be made on whether to retrieve a data entity 24 over the communication channel 6.

For example, a conventional rating system would give a user just the information that most other users gave a data entity 24 a rating meaning "*I do not like*" and only a small minority a rating meaning "*I do like*", resulting in the decision not to retrieve the data entity 24 over the communication channel 6. The method of the invention instead provides the information that a majority of users voted that a data entity 24 contains pornographic content, which is a more semantically meaningful answer than merely a *"Like*/*Do not Like*" answer. User's preferences are relied upon for deciding whether to retrieve the data entity 24. If the data entity 24 contains pornographic content, the decision may be, for example, "*yes*" for an adult and "no" for a child.

Returning to Fig. 1, once the server unit 2 receives the vote, it stores the voting value, the reference to the data entity 24 and the optional additional collected information in a data storage unit. Based on the received votes, the server unit 2 combines the votes from each client unit 4 on a given data unit 24. The combined or aggregated information represents the community vote for data entities 24 and are stored in a data storage unit (not illustrated). More precisely, the references to the data units 24 are stored in association with the community vote. Votes from selected reviewers may be combined with the votes received from the client unit 4.

Any client unit 4 may subsequently obtain references to data entities 24 and associated community votes reflecting the combined perception of the relevance of an association between a category or class and a data entity 24, as processed during the generating procedure S34. More particularly, the client unit 4 requests the community vote associated with a data entity 24 before requesting the data entity 24.

Then, upon receiving the community vote, the client unit 4 determines, i.e. decides, whether to actually request the referenced data entity 24 or not based on local parameters stored on the client unit 4, based on optional interaction with a user accessing the client unit 4, and based on the community vote received from the server unit 2.

The client unit 4 finally sends a request to obtain the data entity 24 itself, if the result of determining and requesting procedure S384 is positive.

While the communication channel 6 may be a two-way network access channel such as a terrestrial telephone line, other types of communication channel 6 may be used.

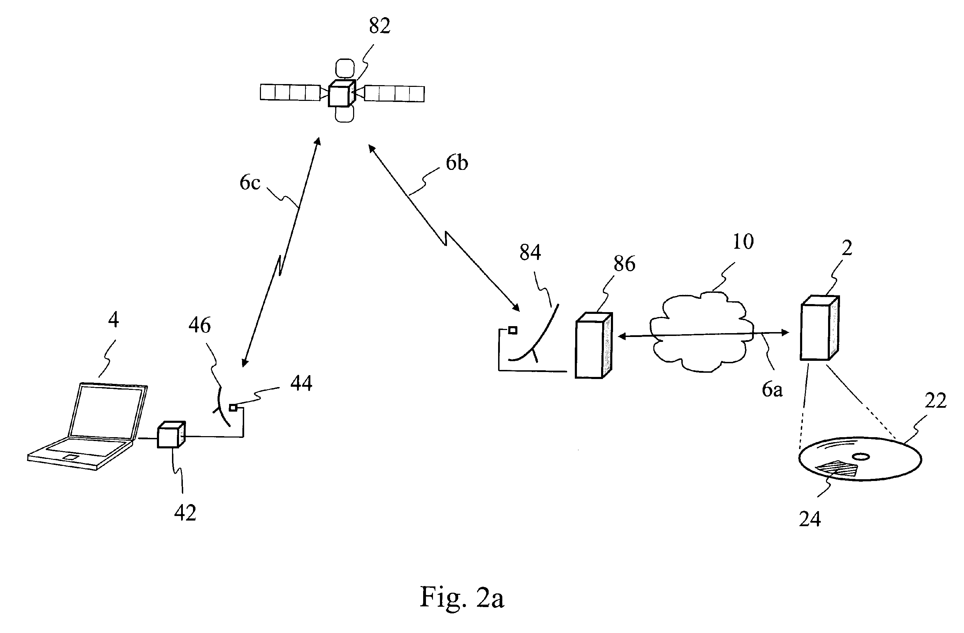

In particular, the configuration of Fig. 2a illustrates an embodiment of the invention, wherein the communication channel 6 (6a, 6b, 6c) includes a direct satellite-to-home data connection 6c. In particular, a hub station 86 is connected to a public network 10, such as the internet, and communication is possible between the hub station 86 and a server unit 2 through a communication segment 6a. The server unit 2 comprises a memory storage unit 22, wherein a data entity 24 is stored.

The hub station 86 is also connected to an earth station 84 configured for communicating through a communication segment 6b with a satellite 82, such as a geostationary satellite. The satellites may be a two-way bent pipe satellite or relay satellite. The skilled person would recognize that many satellites 82, i.e. a constellation of satellites 82, may be provided. The satellite 82 is configured for communicating with end users. In particular, signals can be transferred through a communication channel 6c from the satellite 82 to an antenna 46, such as a satellite dish, having a radio front-end 44, such as an interactive low noise block (interactive LNB) adapted to cooperate with the antenna 46 to receive the signal from satellite 82 (downlink communication) as well as for sending a signal to the satellite 82 (uplink communication). The communication channels are two-way radio channels. The radio front-end 44 is connected to a set-top box 42, which is connected to the client unit 4.

The method according to the invention can be operated with the configuration illustrated in Fig. 2a in a similar manner as with the above described configuration illustrated in Fig. 1. The communication channel 6 of Fig. 1 notably corresponds in Fig. 2a to communication segments 6a, 6b and 6c.

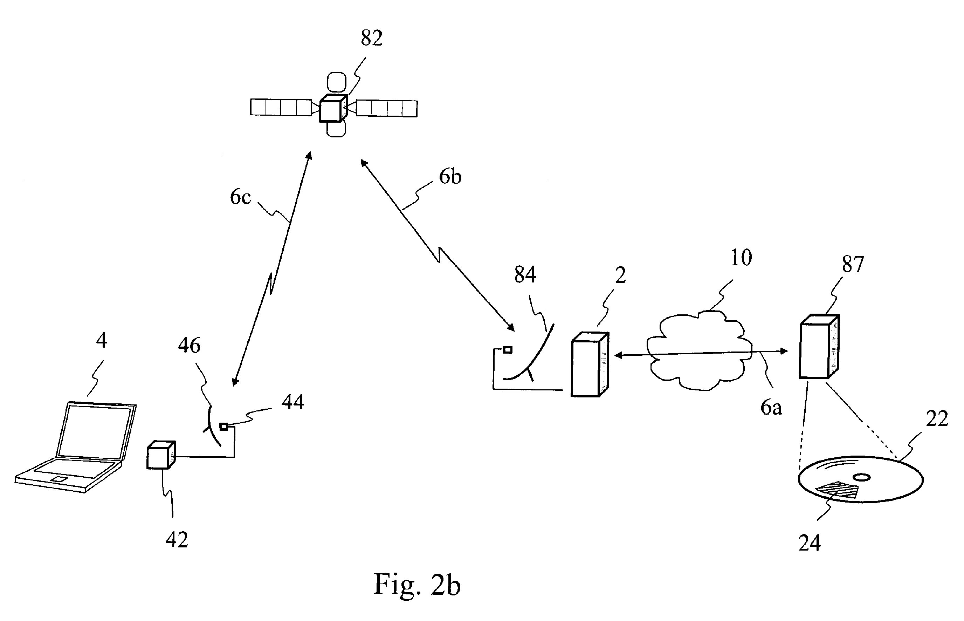

Fig. 2b illustrates another embodiment of the invention wherein the above-described hub station is the server unit 2. The other server connected to the network 10 is indicated by reference 87.

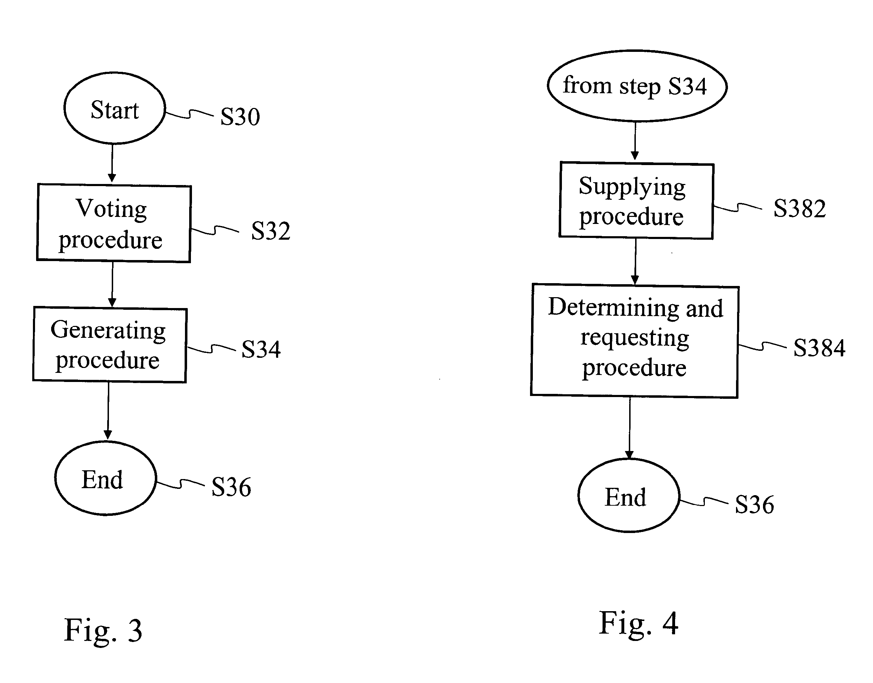

Another embodiment of the method of the invention will now be described with reference to Fig. 3. Upon starting S30, a voting procedure S32 is provided for transferring, to the server unit 2, at least one vote on classification metadata of a data entity 24. The transfer originates for instance from a client unit 4. Then, a generating procedure S34 is provided for generating, by the server unit 2, a community vote on the data entity 24 from the transferred votes on classification metadata of the data entity 24.

The transfer of the data entity 24, and more particularly the request for transferring the data entity 24, is controlled, or at least controllable, by making use of the community vote. The client units 4 are more likely to request the transfer of a data entity 24 if the associated community vote corresponds to preset parameters or corresponds to the expectations of a user interacting with the client unit 4.

The transfer of the data entity may additionally be or alternatively be controlled, or at least controllable, based on a user vote, previously obtained from a user or client unit 4. In other words, an arrangement wherein the user vote overrides or may override the community vote is possible. In this embodiment, a client unit 4 or a user interacting with a client unit 4 is able to obtain his user vote previously made on a piece of classification metadata of a data entity 24. This enables the client unit 4 or user interacting with the client unit 4 to recover and remember his previously made user vote on classification metadata. Thus, the data entity 24 is unlikely to be requested again by the client unit 4 or user if the previously made user vote indicates that the data entity 24 is relevant to a particular category or class in relation to which no intention or desire to obtain a data entity 24 currently exists. This may therefore also reduce the bandwidth usage.

The generating procedure S34 may implement an aggregation function A() applied using functional programming. In this embodiment, the generating procedure S34 includes the evaluation of a mathematical function. The data model is a probabilistic model suited for independent computation of data chunks, i.e. the result of partitioning the full data input into multiple blocks, on a large cluster of computers, for instance using the method described in Jeffrey Dean, Sanjay Ghemawat, *MapReduce: Simplified Data Processing on Large Clusters,* OSDI' 04: 6^{th} Symposium on Operating System Design and Implementation, San Francisco, CA, December 2004. In a first step, intermediate community votes for each tag are computed for each data chunk (map step) and later the community votes are merged and combined into the final single community vote for each tag (reduce step). The use of such a method in the generating procedure S34 is however only one possibility for aggregating or combining the transferred votes to create the community vote.

The community vote on a data entity 24 is the result of an aggregation based on the votes on said data entity 24 transferred from the client unit 4.

In one embodiment, the community vote *v_{c}* on a data entity 24 is the result of the function *A*(*M**; *T),* where *T* is an ordered list of matrix states *tᵢ* (instead of matrix states, also a list of points in time may be used) and *M** is the refined matrix of inputted votes, as will be explained below. The usage of a list of matrix states, instead of a single matrix state, enables to identify and account for trends of a data entity 24 over time, and to identify and account for trends and changes in a user behaviour over time. Using a single matrix state would only enable to see a single snapshot of information about a data entity 24 at a specific point in time.

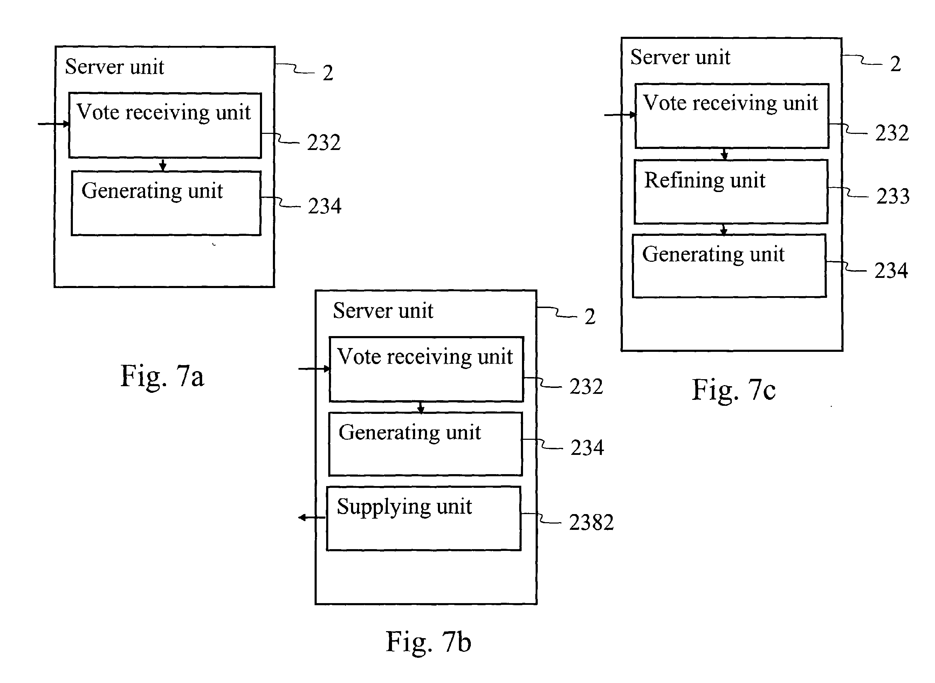

Figure 7a illustrates a schematic representation of a server unit 2 which may be used in the embodiment illustrated in Fig. 3. The server unit 2 comprises a vote receiving unit 232 adapted and configured for receiving a vote on classification metadata of a data entity 24 and for retaining it, for instance by storing it in an integrated memory storage unit (not illustrated). The server unit 2 also comprises a generating unit 234 adapted for generating a community vote on a data entity 24 based on the transferred votes on classification metadata of the data entity 24. The arrow reaching the vote receiving unit 232 in Fig. 7a illustrates the fact that a vote is received from an external component by the vote receiving unit 232 of the server unit 2. The arrow originating from the vote receiving unit 232 and reaching the generating unit 234 in Fig. 7a illustrates the fact that the votes received by the vote receiving unit 232 are used by the generating unit 234 to generate the community vote.

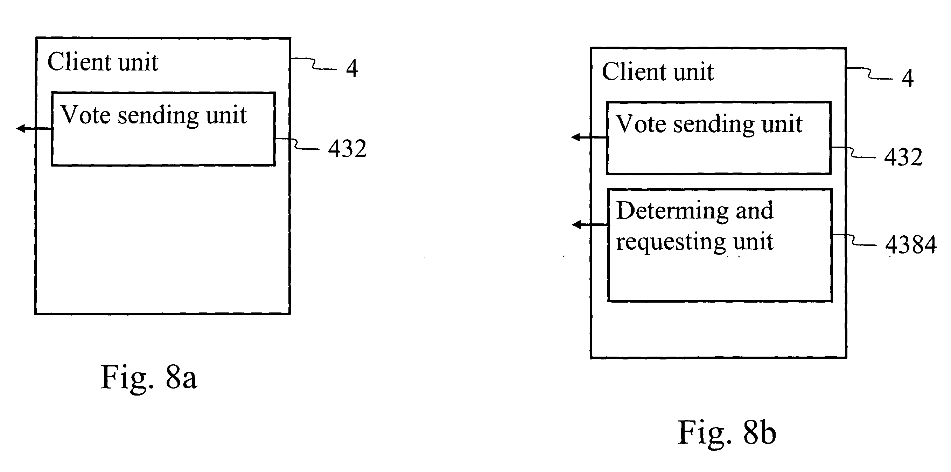

Figure 8a illustrates a schematic representation of a client unit 4 which may be used in cooperation with the server unit 2 illustrated in Fig. 7a. The client unit 4 comprises a vote sending unit 432 configured for sending a vote on classification metadata of a data entity 24 to a server unit 2. The arrow originating from the vote sending unit 432 in Fig. 8a illustrates that a vote is sent from the vote sending unit 432 of the client unit 4 to an external component, namely to a server unit 4.

The client unit 4 may also comprise means for controlling whether to request the transfer of a data entity 24 based on an obtained community vote on a data entity 24. This is however optional, and the control of the transfer of a data entity 24 may be performed by another unit such as the server unit 2, which may be configured to alter a list of references to data entities 24 based on the community vote. For instance, if the association between a given movie and a category *"documentary"* is above the threshold such as 40 percent, and if it is determined that the client unit 4 has indicated that it was looking for movies of the categories "romance" or/and "action" (and optionally based on other characteristics of the client unit 4), the server unit 2 may be programmed not to include a reference to the above-mentioned given movie in the list of references to be sent to the client unit 4.

Fig. 4 illustrates a schematic flow chart of an embodiment of the method of the invention, wherein after the generating procedure s34 ("from step S34"), the community vote is supplied ("supplying procedure s382") to a client unit 4. The client unit 4 which determines whether to request the data entity 24 based on the community vote ("determining and requesting procedure s384").

Fig. 7b illustrates a schematic configuration of an embodiment of a server unit 2, comprising, in addition to a vote receiving unit 232 and a generating unit 234 as described above, a supplying unit 2382 for supplying, i.e. sending, to a client unit 4 the community vote. The arrow originating from the supplying unit 2382 of the server unit 2 illustrates that the supplying unit 2382 is configured to send the community vote to an external component, such as a client unit 4.

Fig. 8b illustrates a schematic configuration of an embodiment of a client unit 4 adapted to cooperate with the server unit 2 of Fig. 7b. The client unit 4 is adapted to receive a community vote from the server unit 2. A community vote receiving unit may be provided and dedicated to this function (not illustrated). Based on the community vote, the client unit 4 determines whether to request the transfer of the data entity 24. This procedure is performed by the determining and requesting unit 4384. The determining and requesting unit 4384 may operate based on procedures and parameters stored in the client unit 4, such as a computer program adapted to be executed thereon, or may involve interactions with an end user through a computer-implemented user interface. Such user interface may result from the execution of a computer program on the client unit 4.

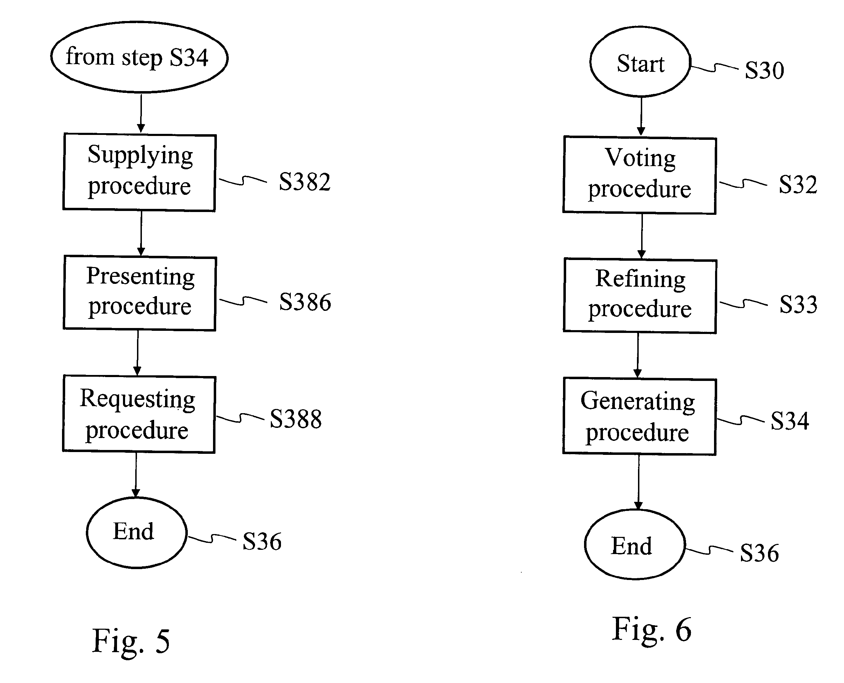

Fig. 5 illustrates a flow chart of one embodiment of the method according to the invention, wherein once the community vote is supplied through a supplying procedure S382 from the server unit 2 to a client unit 4, the client unit 4 performs a presenting procedure S386. The presenting procedure S386 includes presenting on a user interface the community vote to a user. The user may then provide to the client unit 4 information on whether the data entity 24 appears to meet his or her expectations. The user provides the information on whether to request the data entity 24 based on the community vote. Upon receiving the information from the user through an input user interface, the client unit 4 requests S388 the server unit 2 to transfer the data entity 24, if it is determined that the user wishes to obtain the data entity 24.

A particular embodiment of the method and system of the invention will now be described with reference with Figs. 6, 7c, 9 and 10. In this embodiment, a refining procedure S33 is provided and is configured to be carried out between the voting procedure S32 and the generating procedure S34 as illustrated in Fig. 6. The purpose of using a refining procedure S33 has already been described above. It will now be described in more details and by referring to more specific embodiments.

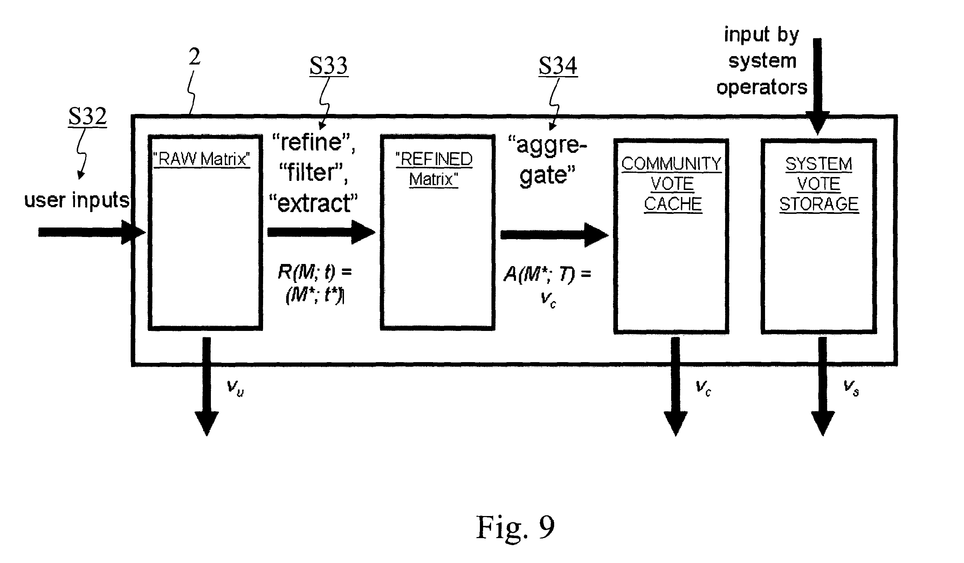

In one embodiment (as illustrated in Fig. 9, which shows how votes are stored, processed and returned), three different types of votes on data entities 24 exist. All votes are represented as vectors.

A user vote vᵤ is given by individual users on a data entity 24 and transferred S32 to the server unit 2 ("user inputs"). The user votes are stored as columns in a matrix, herewith called the raw matrix. If a user wants to access his or her vote vᵤ on a data entity 24, the corresponding values stored in the raw matrix are returned (arrow originating from the "RAW Matrix" block in Fig. 9).

A community vote v_{c} is an aggregation S34 of user votes on a data entity 24, where "aggregation" may include combining as already described. The community vote v_{c} is computed S34 out of a matrix, herewith called the refined matrix *M**, by the function *A*(*M**; *T)* and cached in a community vote cache. Caching the community vote v_{c} improves the system performance because the community vote v_{c} need not be re-computed upon receiving each request to obtain the community vote v_{c}. When the refined matrix *M** of a data entity 24 changes, its community vote v_{c} is computed again. The new value is stored in the community vote cache as long as the refined matrix does not change again.

A system vote vₛ is given by the operators of the system on a data entity 24 ("input by system operators" in Fig. 9). Its purpose is to provide moderated, reasonable and reliable information about a data entity 24, for example to ensure that malicious users do not flood the system with fake votes on some of the data entities 24 in order to malevolently influence information about said data entities 24. In particular, a system vote vₛ on a data entity 24 may be used to overwrite the community vote v_{c} on said data entity 24 in its entirety or only in specific facets, i.e. only parts of the community vote v_{c}.

Users may be allowed to decide whether they honour or discard system votes vₛ. On one hand, the system vote vₛ is a protection mechanism to increase reliability of and trust in the system. On the other hand, users can rely on the system vote vₛ on a data entity 24 if no other information (user votes, community vote) about said data entity 24 exists yet in the system. In this regard, the system vote can be used to bootstrap (initialize) the system and mitigate possible cold start problems during the initial phase of the system when users just start to use the system and not many user votes have been collected yet. The system vote on a data entity 24 is stored in the system vote storage.

The vote tuple (*vᵤ*, *v_{c}*, *vₛ*) is returned by the server unit 2 (as shown by the three arrows originating from the bottom of the server unit 2 on Fig. 9) upon request by the client unit 4. *vᵤ* is a user vote on a data entity 24, if existing, as stored in the raw matrix. *v_{c}* is a community vote on a data entity 24, if existing, as stored in the community vote cache. *vₛ* is a system vote on a data entity 24, if existing, as stored in the system vote storage. The vote tuple is used as input parameter together with the user preferences and client software configuration for the decision making function. The decision making function includes deciding S384 whether to retrieve the actual data entity 24 over the communication channel 6.

An example of the combined effect and operation of the refiner function R(), which may be implemented by the refining procedure S33, and the effect of the aggregation function A(), which may be implemented by the generating procedure S34, is as follows.

Let us imagine that 100 users voted for a data entity X. In this example, only the portion of the votes relating to the classification category *"pornography",* and only the last vote (i.e. the most recent vote) of each user for said data entity X are considered. That is, if a user changed his mind about data entity X regarding its association with the classification category *"pornography",* only the most recent vote on data entity X is considered. This functionality is explained above. The skilled person would however understand that the example can be extended to more classification categories and to more than just the most recent vote.

In the example, the refiner function *R*() removes 14 of the 100 votes because 9 votes are too old (the votes were submitted a too long time ago, i.e. out of the specified time window, as explained above) and because 5 votes come from users identified as voting bots or malicious or abusive users. The aggregation function *A*() then computes S34 from the output of the refiner function *R*(), which is the remaining 86 votes, the community vote for the classification category "pornography". Assuming that 67 of these 86 votes reflects a "yes" and 19 reflects a "no", the community vote on the association between the classification category "*pornography*" and the data entity 24 is 0.779 (or 77.9 percent).

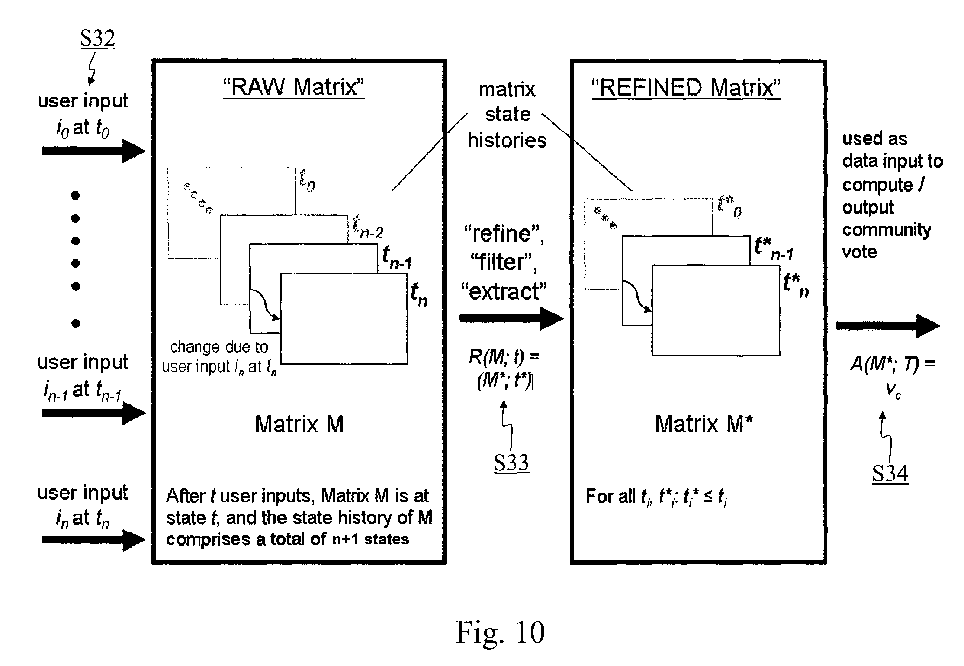

The storage and management of the received information about data entities 24 and client units 4 or users interacting with those client units 4 is as follows, in one embodiment with reference to Fig. 10.

For each data entity 24, the server unit 24 stores and updates over time two matrix state histories, depending on user inputs (left-hand side of Fig. 10) and other pieces of data as described below. This enables to identify and account for trends associated with data entities 24 and with users in time. This also ensures that the user votes used for generating S33 the community vote are up-to-date.

The raw matrix state history M tracks user inputs and thereby the changes of information about a data entity 24 over time. A new user input, e.g. a new user vote or a modification of an existing user vote, triggers and results in a new matrix state. After a number *n+1* of user inputs, the raw matrix of a data entity is at state *tₙ*. The date and time of user inputs are stored along with the actual user votes.

The raw matrix state history M of a data entity 24 enables to keep a history of user inputs, i.e. what happened and when it did happen. The latest raw matrix state M of a data entity 24 reflects the currently available user votes on the data entity 24.

The raw matrix states M are used as input of the function R(M; t) (where t denotes a matrix state or a point in time) to compute S33 the refined matrix states *M**. The different states of refined matrix are tracked in the refined matrix state history. The function *R*(*M*; *t*) is called the refiner function. Its main task is to filter out invalid, incorrect or fake information from the raw matrix M, and refining and improving the quality of information about a data entity 24 for further processing. By this refinement step, the refined matrix state history M enables to track the semantic changes of a data entity 24 over time.

The community voting information about a data entity 24, i.e. the community vote *v_{c}*, sent from the server unit 2 to the client unit 4, is based on the latest refined matrix states *M**: the community vote *v_{c}* is the result of the aggregation function *A*(*M**; *T)* as described above and illustrated in the right-hand side of Fig. 10.

Having two distinct matrix state histories M and *M** enables to identify and account for trends of the data entity 24, identify and account for changes in user perceptions and ensure that data about the data entity 24 is current and up-to-date.

There are additional benefits of having two distinct matrix histories M and *M**. The raw matrix is used to store user input in real time, i.e. it is responsible for ensuring reliable data input into the server unit 2, e.g., storing a new vote of a user on a data entity 24. In contrast, the refined matrix *M** is used to compute S34 data output going out of the system, for example, for meeting a user's request for information about a data entity 24 by computing and returning the user vote, community vote and system vote on the data entity 24.

Using two matrix histories M and *M** relaxes the time requirements to compute S33 and update the refined matrix *M** (for readability, the expression refined matrix is used instead of refined matrix states). The refined matrix *M** can be computed out of the raw matrix M during off-peak hours when the system load is low so that no performance impact is experienced by currently active users of the system.
Additionally, it allows the usage of computationally (more) expensive algorithms for computing the refined matrix *M** out of the raw matrix M because the data input and data output components as described above can be accessed and used independent from each other. The effect is that the functional operability of the system is protected from disruption due to high system load caused by computation of refined matrix *M**. Similarly, the computation of the community votes out of the refined matrices *M** and caching the resulting values in the community vote caches can be performed independently from processing user inputs.

The benefits of using a refining procedure S33, a generating procedure S34 and the above-described storage and management of the inputs and outputs of said procedures include the following.

First, the content and meaning of a data entity 24 changes over time, e.g. news portals with frequently changing topics, this may be tracked more accurately. Secondly, if a data entity 24 is increasingly voted on by different types of users, e.g. a report previously read only by technical experts is now addressed by mainstream newspapers and the general public, this may be tracked. Thirdly, very old user votes may be discarded from the computation S34 of the community vote. Fourthly, if the same data entity 24 is perceived in a different manner by the same users, e.g. because the importance of environmental protection and climate issues increases as soon as more scientific information becomes available to the public, this may be tracked.

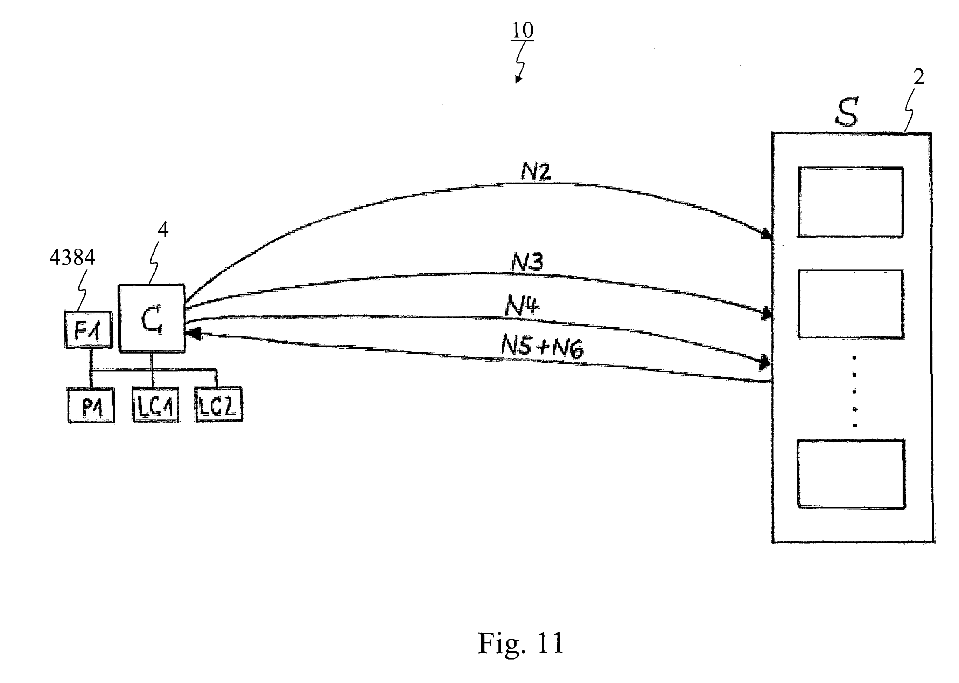

Fig. 11 illustrates another embodiment of the method of the invention including two additional procedures: a transparent client registration and the ability to authenticate the voting communication.

The optional transparent client registration is as follows. The client registration with the server unit 2 is handled dynamically for the sake of convenience. The server unit 2 automatically registers new client units 4 and generates a private shared value which is sent to and shared with the client unit 4. A client unit 4 is uniquely identified by this shared secret and a unique nonce/identifier.

In order to guarantee the authenticity of the vote, the vote and the reference to the data entity 24 include a method to authenticate the vote. The client unit 4 authenticates the vote by computing a HMAC (RFC 2104 - HMAC: Keyed-Hashing for Message Authentication) value using the private shared value.

The process according to this embodiment will now be described in more details by reference to Fig. 11. A communication channel 6 is established over the network 10 between the client unit 4 (symbol "C") and the server unit 2 (symbol "S"). A communication link N2 is established for the transparent client registration required by the authenticity of voting communication. A communication link N3 is used by the client unit 4 to submit voting information on a data unit 24 to the server unit 2. A communication link N4 is used by the client unit 4 to query and receive N5 voting information about the referenced data unit 24 from the server unit 2. Finally, a communication link N6 is used by the server unit 2 to send additional information based on the client profile.

The client unit 4 includes a client computer program or software configured to run thereon. The client computer program or software may be relatively limited in terms of processing or data storage. It may be embedded in an equipment like router, set-top box or desktop computer.

Client preferences (symbol "P1") are stored on the client unit 4. Client preferences P1 may be used as an input parameter for the decision making function, as described above.

A local cache (symbol "LC1") is provided on the client unit 4 for caching voting values of previous queries to the server unit 2. This enables to reduce data communication, bandwidth usage and lookup latency. A local cache (symbol "LC2") is also provided on the client unit 4 for caching voting values of already submitted voting values sent to the server unit 2 to reduce data communication, bandwidth usage and lookup latency.

The determining and requesting unit 4384 (symbol "F1") includes instructions to carry out the decision making function for deciding whether to request a data entity 24. The decision making function takes as input parameters the community vote on the data entity 24 and the client preferences. The server unit 2 accepts votes and lookups from the client unit 4.

In one embodiment, the data entity 24 is a reference to another data entity 24 (in a recursive embodiment). A transferred vote is thus a vote on an association between a piece of classification metadata and a reference to a data entity 24. This enables to generate a community vote which may later be used by client units 4 to filter the transfer of the reference itself (wherein the reference acts as a data entity 24 in this embodiment). If a client unit 4 includes an automatic component, such as a proxy, such filtering may consist in automatically removing, by the proxy, the reference itself during transfer (data entity transfer control by filtering based on a community vote).

The reference (acting as data entity 24 in this embodiment) may be a link destination, such as, in HTML or XHTML, the "href" characteristic pointing to a Universal Resource Locator (URL), in a HTML page being downloaded. The automatic removal may take place if it is determined that the community vote indicates that the reference to the data entity does not meet the criteria of the client unit 4, eventually resulting in avoiding the client unit 4 to fetch the referred data entity, i.e. to request its transfer. This may also constitute an efficient measure against the bandwidth-demanding practice of link prefetching, performed by some web browsers.

The invention also relates to a method for controlling a server unit 2 so that it carries out any one of the above-mentioned procedures and steps, to be executed on the server unit 2. The invention also relates to a computer program configured when executed on a server unit 2, to carry out such a method.

The invention further relates to a method for controlling a client unit 4 so that it carries out any one of the above-mentioned procedures and steps, to be executed on the client unit 4. The invention also relates to a computer program configured when executed on a client unit 4, to carry out such a method.

Where the term "unit" is used herewith (for instance in "vote *receiving* unit", "generating *unit", "supplying* unit", *"refining unit",* "vote *sending* unit", and *"determining and* requesting unit"), no restriction is made regarding how distributed the constituent elements of a unit may be. That is, the constituent elements of a unit may be distributed in different software or hardware components or devices for bringing about the intended function. Furthermore, some units may be gathered together for performing their functions by means of a combined, single unit. A vote receiving unit 232 and a generating unit 234 may for instance be gathered in a server unit 2 for providing their intended functionalities in a combined manner. Likewise, other combinations of units are possible, such as for instance combining a vote receiving unit 232, a generating unit 234 and a supplying unit 2382 in a server unit 2, combining a vote receiving unit 232, a refining unit 233 and a generating unit 234 in a server unit 2, or combining a vote sending unit 432 and a determining and requesting unit 4384 in a client unit 4.

In view of the above, the term *"system"* is herewith to be understood in a broad manner as a set of interacting, cooperating or interdependent technical units or entities forming an integrated whole.

The above-mentioned units may be implemented using hardware, software, a combination of hardware and software, preprogrammed ASICS (application-specific integrated circuit), etc. A client unit 4 and a server unit 2 may include a computer processing unit (CPU), a storage unit, input/output (I/O) units, network connection units, etc.

Although the present invention has been described on the basis of detailed examples, the detailed examples only serve to provide the skilled person with a better understanding, and are not intended to limit the scope of the invention. The scope of the invention is much rather defined by the appended claims.

## Claims

1. Method for controlling the transfer of a data entity (24) from a server unit (2) on a communication channel (6), including
a voting procedure (S32) for transferring, to the server unit (2), a vote on classification metadata of the data entity (24); and
a generating procedure (S34) for generating, by the server unit (2), a community vote on the data entity (24) from transferred votes on classification metadata of the data entity (24);
wherein the transfer of the data entity (24) is controlled based on the community vote.

2. Method of claim 1, further including
a supplying procedure (S382) for supplying, to a client unit (4), the community vote; and
a determining and requesting procedure (S384) for determining, by the client unit (4), whether to request transfer of the data entity (24) depending on the community vote and, if so, requesting transfer.

3. Method of claim 1, further including
a supplying procedure (S382) for supplying, to a client unit (4), the community vote;
a presenting procedure (S386) for presenting on a user interface of the client unit (4) the community vote; and
a requesting procedure (S388) for receiving, by the client unit (4), a request to transfer the data entity (24) and, if such request is received, requesting, by the client unit (4), the transfer of the data entity (24).

4. Method according to any one of the preceding claims, wherein the vote on classification metadata of the data entity (24) is a multidimensional data structure including at least one association of a class or category and a preference weight.

5. Method of claim 4, wherein the preference weight reflects a perceived value of the association between the class or category and the data entity (24), as perceived by a user.

6. Method according to any one of the preceding claims, wherein, in the generating procedure (S34), generating the community vote includes combining the transferred votes.

7. Method according to any one of the preceding claims,
further including a refining procedure (S33) including refining the transferred votes by removing at least one of invalid, incorrect and fake votes, and
wherein, in the generating procedure (S34), generating the community vote is performed from the refined transferred votes.

8. System for controlling the transfer of a data entity (24) from a server unit (2) on a communication channel (6), including
a server unit (2) including
a vote receiving unit (232) configured for receiving a vote on classification metadata of the data entity (24); and
a generating unit (234) configured for generating a community vote on the data entity (24) from received votes on classification metadata of the data entity (24); and
a client unit (4);
wherein the transfer of the data entity (24) from the server unit (2) to the client unit (4) is controlled based on the community vote.

9. System of claim 8, wherein
the server unit (2) further includes a
supplying unit (2382) configured for supplying, to the client unit (4), the community vote; and
the client unit (4) includes
a determining and requesting unit (4384) configured for determining whether to request transfer of the data entity (24) depending on the community vote and, if so, requesting transfer.

10. System of claim 8, wherein
the server unit (2) further includes
a supplying unit (2382) configured for supplying, to the client unit (4), the community vote; and
the client unit (4) includes
a presenting unit configured for presenting on a user interface of the client unit (4) the community vote; and
a requesting unit configured for receiving a request to transfer the data entity (24) and, if such request is received, requesting the transfer of the data entity (24).

11. System according to any one of claims 8 to 10, wherein the vote on classification metadata of the data entity (24) is a multidimensional data structure including at least one association of a class or category and a preference weight.

12. System of claim 11, wherein the preference weight reflects a perceived value of the association between the class or category and the data entity (24), as perceived by a user.

13. System according to any one of claims 8 to 12, wherein the generating unit (234) is configured for generating the community vote by at least combining the transferred votes.

14. System according to any one of claims 8 to 13, wherein
the server unit (2) further includes
a refining unit (233) configured for refining the transferred votes by removing at least one of invalid, incorrect and fake votes; and
the generating unit (234) is configured for generating the community vote from the refined transferred votes.

15. Server unit (2) for use in a system for controlling the transfer of a data entity (24) from the server unit (2) on a communication channel (6), wherein
the server unit (2) includes
a vote receiving unit (232) configured for receiving a vote on classification metadata of the data entity (24); and
a generating unit (234) configured for generating a community vote on the data entity (24) from received votes on classification metadata of the data entity (24); and
the transfer of the data entity (24) to the server unit (2) is controlled or controllable based on the community vote.

16. Server unit (2) of claim 15, further including a supplying unit (2382) configured for supplying, to a client unit (4), the community vote.

17. Server unit (2) of claim 15 or 16, wherein the generating unit (234) is configured for generating the community vote by at least combining the received votes.

18. Server unit (2) according to any one of claims 15 to 17,
wherein
the server unit (2) further includes
a refining unit (233) configured for refining the received votes by removing at least one of invalid, incorrect and fake votes, and
the generating unit (234) is configured for generating the community vote from the refined received votes.

19. Client unit (4) for use in a system for controlling the transfer of a data entity (24) from a server unit (2) on a communication channel (6), the client unit (4) including
a determining and requesting unit (4384) configured for determining whether to request transfer of the data entity (24) depending on the community vote and, if so, requesting transfer.

20. Client unit (4) of claim 19, further including
a presenting unit configured for presenting on a user interface of the client unit (4) the community vote; and
a requesting unit configured for receiving a request to transfer the data entity (24) from a user and, if such request is received, requesting the transfer of the data entity (24).

21. Signal including a vote on classification metadata of the data entity (24) for use in a system according to any one of claims 8 to 14.

22. Computer program configured, when executed on one or more computers, to carry out the method according to any one of claims 1 to 7.

## Amended claims

### Amended claims in accordance with Rule 137(2) EPC.

**1.** Method for controlling the transfer of a data entity (24) from a server unit (2) on a communication channel (6), including
a voting procedure (S32) for transferring, to the server unit (2), a vote on classification metadata of the data entity (24); and
a generating procedure (S34) for generating, by the server unit (2), a community vote on the data entity (24) from transferred votes on classification metadata of the data entity (24);
wherein the transfer of the data entity (24) is controlled based on the community vote.

**2.** Method of claim 1, further including
a supplying procedure (5382) for supplying, to a client unit (4), the community vote; and
a determining and requesting procedure (5384) for determining, by the client unit (4), whether to request transfer of the data entity (24) depending on the community vote and, if so, requesting transfer.

**3.** Method of claim 1, further including
a supplying procedure (5382) for supplying, to a client unit (4), the community vote;
a presenting procedure (5386) for presenting on a user interface of the client unit (4) the community vote; and
a requesting procedure (S388) for receiving, by the client unit (4), a request to transfer the data entity (24) and, if such request is received, requesting, by the client unit (4), the transfer of the data entity (24) .

**4.** Method according to any one of the preceding claims, wherein the vote on classification metadata of the data entity (24) includes at least one association of a class or category and a preference weight.

**5.** Method of claim 4, wherein the preference weight reflects a perceived value of the association between the class or category and the data entity (24), as perceived by a user.

**6.** Method according to any one of the preceding claims, wherein, in the generating procedure (S34), generating the community vote includes combining the transferred votes.

**7.** Method according to any one of the preceding claims,
further including a refining procedure (S33) including refining the transferred votes by removing at least one of invalid, incorrect and fake votes, and
wherein, in the generating procedure (S34), generating the community vote is performed from the refined transferred votes.

**8.** System for controlling the transfer of a data entity (24) from a server unit (2) on a communication channel (6), including
a server unit (2) including
a vote receiving unit (232) configured for receiving a vote on classification metadata of the data entity (24); and
a generating unit (234) configured for generating a community vote on the data entity (24) from received votes on classification metadata of the data entity (24); and
a client unit (4);
wherein the transfer of the data entity (24) from the server unit (2) to the client unit (4) is controlled based on the community vote.

**9.** System of claim 8, wherein
the server unit (2) further includes a
supplying unit (2382) configured for supplying, to the client unit (4), the community vote; and
the client unit (4) includes
a determining and requesting unit (4384) configured for determining whether to request transfer of the data entity (24) depending on the community vote and, if so, requesting transfer.

**10.** System of claim 8, wherein
the server unit (2) further includes
a supplying unit (2382) configured for supplying, to the client unit (4), the community vote; and
the client unit (4) includes
a presenting unit configured for presenting on a user interface of the client unit (4) the community vote; and
a requesting unit configured for receiving a request to transfer the data entity (24) and, if such request is received, requesting the transfer of the data entity (24).

**11.** System according to any one of claims 8 to 10, wherein the vote on classification metadata of the data entity (24) includes at least one association of a class or category and a preference weight.

**12.** System of claim 11, wherein the preference weight reflects a perceived value of the association between the class or category and the data entity (24), as perceived by a user.

**13.** System according to any one of claims 8 to 12, wherein the generating unit (234) is configured for generating the community vote by at least combining the transferred votes.

**14.** System according to any one of claims 8 to 13, wherein
the server unit (2) further includes
a refining unit (233) configured for refining the transferred votes by removing at least one of invalid, incorrect and fake votes; and
the generating unit (234) is configured for generating the community vote from the refined transferred votes.

**15.** Server unit (2) for use in a system for controlling the transfer of a data entity (24) from the server unit (2) on a communication channel (6), wherein
the server unit (2) includes
a vote receiving unit (232) configured for receiving a vote on classification metadata of the data entity (24); and
a generating unit (234) configured for generating a community vote on the data entity (24) from received votes on classification metadata of the data entity (24); and
the server unit (2) is further for use in the above-mentioned system for controlling the transfer of the data entity (24) from the server unit (2) based on the community vote.

**16.** Server unit (2) of claim 15, further including a supplying unit (2382) configured for supplying, to a client unit (4), the community vote.

**17.** Server unit (2) of claim 15 or 16, wherein the generating unit (234) is configured for generating the community vote by at least combining the received votes.

**18.** Server unit (2) according to any one of claims 15 to 17, wherein
the server unit (2) further includes
a refining unit (233) configured for refining the received votes by removing at least one of invalid, incorrect and fake votes, and
the generating unit (234) is configured for generating the community vote from the refined received votes.

**19.** Client unit (4) for use in a system for controlling the transfer of a data entity (24) from a server unit (2) on a communication channel (6), the client unit (4) including
a determining and requesting unit (4384) configured for determining whether to request transfer of the data entity (24) depending on a community vote on the data entity (24) and, if so, requesting transfer.

**20.** Client unit (4) of claim 19, further including
a presenting unit configured for presenting on a user interface of the client unit (4) the community vote; and
a requesting unit configured for receiving a request to transfer the data entity (24) from a user and, if such request is received, requesting the transfer of the data entity (24).

**21.** Use, in a system according to any one of claims 8 to 14, of a signal including a vote on classification metadata of the data entity (24).

**22.** Computer program configured, when executed on one or more computers, to carry out the method according to any one of claims 1 to 7.
